# EUROPÄISCHE PATENTSCHRIFT

(11) **EP 0 794 087 B1**
(45) Veröffentlichungstag und Bekanntmachung des Hinweises auf die Patenterteilung: **19.09.2001**
(21) Anmeldenummer: 97101840.3
(22) Anmeldetag: 06.02.1997
(51) Int. Cl.: B60R 1/06

(54) **Aussenrückblickspiegel für Fahrzeuge, vorzugsweise für Kraftfahrzeuge**
Extension rearview miror for vehicles, especially for motor vehicles
Rétroviseur extérieur pour véhicules, en particulier pour véhicules automobiles

(30) Priorität: 08.03.1996 DE 19609017
(43) Veröffentlichungstag der Anmeldung: 10.09.1997
(73) Patentinhaber: REITTER & SCHEFENACKER GmbH & Co. KG, D-73730 Esslingen (DE)
(72) Erfinder: Mertens, Jens, 70374 Stuttgart (DE)
(74) Vertreter: Jackisch-Kohl, Anna-Katharina

(56) Entgegenhaltungen:
- EP-A- 0 099 216
- DE-A- 3 206 754
- DE-A- 3 344 539
- DE-A- 3 501 915
- DE-A- 3 614 927
- FR-A- 2 714 638
- GB-A- 2 095 323
- GB-A- 2 266 690
- US-A- 2 710 734
- US-A- 3 347 513
- US-A- 4 826 305
- US-A- 4 957 359

## Beschreibung

Die Erfindung betrifft einen Außenrückblickspiegel für Fahrzeuge, vorzugsweise für Kraftfahrzeuge, nach dem Oberbegriff des Anspruches 1.

Bei einem bekannten, gattungsgemässen Außenrückblickspiegel dieser Art (US-A-3 347 513) ist der Träger durch das Gehäuse des Außenrückblickspiegels und das Führungselement durch einen kalottenförmigen, am Umfang des Spiegelglasträgers vorgesehenen starren Wandabschnitt gebildet. Die Feder ist eine Zugfeder, die mit ihrem einen Ende an einer Öse einer Platte des Spiegelglasträgers und mit ihrem anderen Ende an einer Einhängeöse eines zentralen Steges des Gehäuses befestigt ist. Die Feder greift mittig an der Platte des Spiegelglasträgers an und zieht das Führungselement in das Gehäuse. Durch die Befestigung der Feder am Spiegelglasträger und am Gehäuse über besonders ausgebildete Einhängeösen ist der Spiegel konstruktiv aufwendig ausgebildet, was sich nachteilig auf die Herstellungskosten und Montage des Spiegels auswirkt. Die zentral angeordnete Zugfeder kann nicht verhindern, daß der Spiegelgiasträger Vibrationen oder Schwingungen ausführt. Um eine einwandfreie Anlage des starren Führungselementes an der Gegenfläche des Trägers zu erreichen, müssen enge Fertigungstoleranzen eingehalten werden.

Es ist auch ein Außenrückblickspiegel bekannt, bei dem an der Rückseite des Spiegelglasträgers Federarme vorgesehen sind, die unter der Kraft jeweils eines Federelementes an der auf der Hohlkugelfläche liegenden Gegenfläche des Trägers anliegen. Um das Federelement am Führungselement lagern zu können, ist eine besondere konstruktive Gestaltung des Führungselementes notwendig.

Bei einem anderen bekannten Außenrückblickspiegel stehen von der Rückseite des Spiegelglasträgers die Führungselemente ab, die zwischen zwei Schenkeln eines etwa dreieckförmig ausgebildeten Federelementes gehalten sind. Auch hierfür ist eine besondere konstruktive Ausbildung erforderlich.

Der Erfindung liegt die Aufgabe zugrunde, den gattungsgemäßen Außenrückblickspiegel so auszubilden, daß er eine einfache konstruktive Ausbildung hat und dennoch eine problemlose Verstellung und Lagesicherung des Spiegelglasträgers gegenüber dem spiegelgehäuseseitigen Träger ermöglicht.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel wird durch die elastische Verformung des Führungselementes und durch die unmittelbare Anlage der Feder am Führungselement auf konstruktiv einfache Weise erreicht, daß zwischen dem Träger und dem Führungselement ein ausreichend starker Reibschluß erzeugt wird, so daß der Spiegelglasträger in der jeweils eingestellten Lage sicher am Träger gehalten ist und insbesondere keine Vibrationen oder Schwingungen ausführt. Infolge der flächigen Anlage des Führungselementes an der Gegenfläche ist eine besondere konstruktive Gestaltung des Führungselementes nicht erforderlich.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Draufsicht einen erfindungsgemäßen Außenrückblickspiegel,
- Fig. 2: eine Ansicht in Richtung des Pfeiles II in Fig. 1,
- Fig. 3: einen Schnitt längs der Linie III-III in Fig. 2.

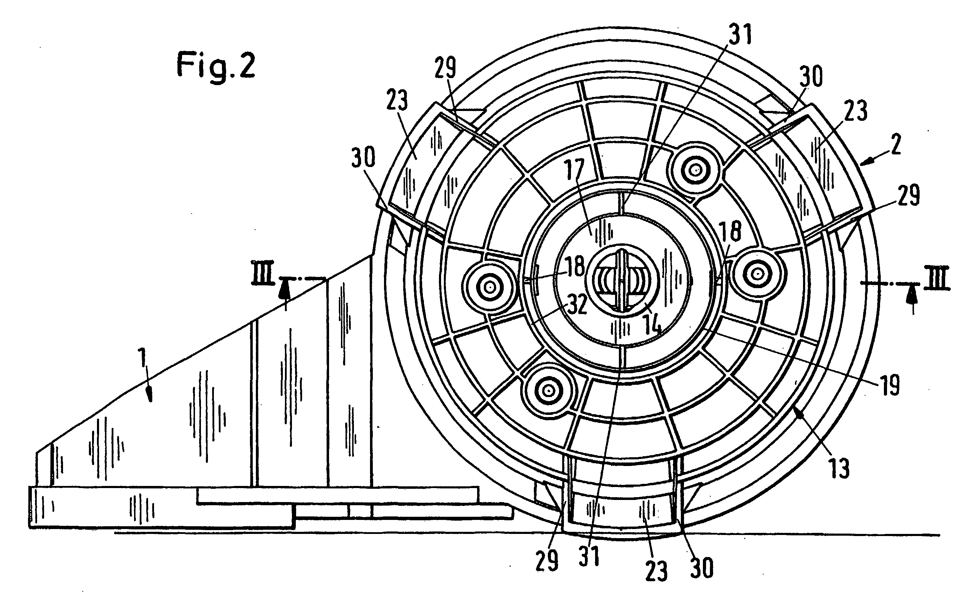

Der Außenrückblickspiegel ist für Kraftfahrzeuge vorgesehen und hat einen Träger 1, der in einem (nicht dargestellten) Spiegelgehäuse untergebracht ist. Der Träger 1 besteht vorteilhaft aus Kunststoff und trägt einen Spiegelglasträger 2, auf dem in bekannter Weise das (nicht dargestellte) Spiegelglas befestigt wird. Der Spiegelglasträger 2 hat in Ansicht (Fig. 2) kreisförmigen Umriß. Er kann selbstverständlich auch jede andere geeignete Umrißform, beispielsweise eine rechteckförmige Umrißform, haben. Der Spiegelglasträger 2 kann gegenüber dem Träger 1 manuell oder elektromotorisch verstellt werden.

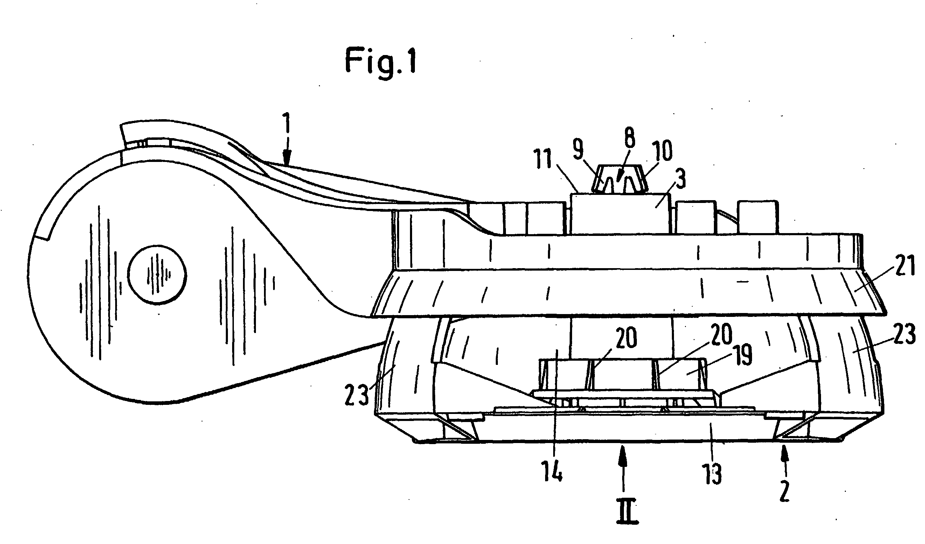

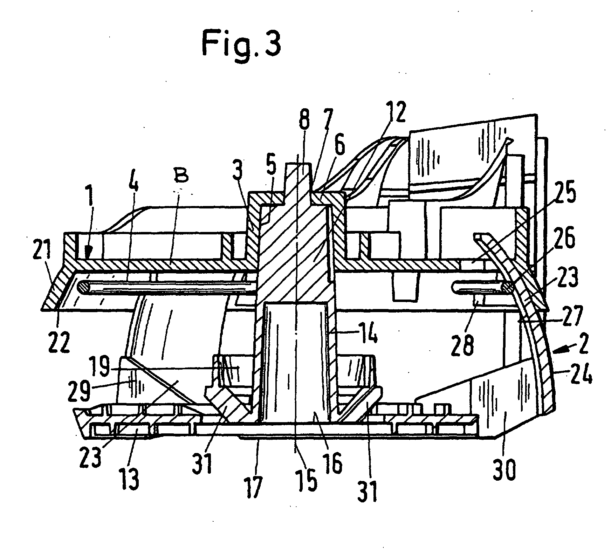

Der Träger 1 ist mit einer Aufnahme 3 versehen, die von einer Grundplatte 4 des Trägers 1 absteht. Wie Fig. 3 zeigt, ist die Innenwandung 5 der Aufnahme 3 konisch ausgebildet. Die Aufnahme 3 hat einen Boden 6, der mit einer mittig liegenden Stecköffnung 7 versehen ist, die rechteckigen Umriß hat. Durch sie wird ein widerhakenartiger Ansatz 8 (Fig. 1 und 3) des Spiegelglasträgers 2 gesteckt. Die beiden Hakenarme 9 und 10 des Ansatzes 8 stützen sich in der Einbaulage an der Unterseite 11 des Bodens 6 des Trägers 1 ab. Die Hakenarme 9, 10 sind elastisch biegbar ausgebildet. Damit der Ansatz 8 durch die Stecköffnung 7 des Aufnahmebodens 6 gesteckt werden kann, werden die Hakenarme 9, 10 während des Durchsteckvorganges zunächst elastisch in Richtung zueinander gebogen, bis der Ansatz 8 durch die Öffnung gesteckt ist. Dann spreizen die Hakenarme 9, 10 in die in Fig. 1 dargestellte Lage auseinander und stützen sich mit ihren freien Enden auf der Unterseite 11 des Aufnahmebodens 3 ab. Dadurch ist der Spiegelglasträger einfach am Träger 1 gesichert. Zusätzliche Sicherungsteile für ein unbeabsichtigtes Lösen des Spiegelglasträgers 2 sind nicht erforderlich.

Der Ansatz 8, der einen der Stecköffnung 7 entsprechenden Umriß hat, steht von einem in der Aufnahme 3 angeordneten Lagerteil 12 ab, der nahezu über seinen gesamten Umfang an der Innenwandung 5 der Aufnahme 3 anliegt (Fig. 3). An den Lagerteil 12 ist ein das (nicht dargestellte) Spiegelglas aufweisender Trägerteil 13 mit einem konischen Verbindungsstück 14 angebunden, das vorteilhaft einstückig mit dem Lagerteil 12 und dem Trägerteil 13 ausgebildet ist. Am trägerseitigen Ende des Verbindungsstückes 14 ist ein flanschartiges Anschlußstück 17 vorgesehen, das vorzugsweise einstückig mit dem Verbindungsstück 14 ausgebildet ist. Das Anschlußstück 17 hat kreisförmigen Umriß, kann aber auch jeden anderen geeigneten Umriß aufweisen. Das Anschlußstück 17 ist mit zwei diametral einander gegenüberliegenden Stegen 31 (Fig. 2 und 3) an einen zylindrischen Ring 19 angeschlossen, der koaxial zum Lagerteil 12 liegt. Über den Umfang verteilt sind an der Außenseite des Ringes 19 Versteifungsrippen 20 vorgesehen, die in Axialebenen des Ringes 19 liegen. Die Stege 31 liegen ebenfalls in einer Axialebene des Ringes 19 bzw. des Verbindungsstückes 14 und sind in Richtung auf den Träger 1 divergierend zueinander angeordnet. Vorteilhaft sind die Stege 31 einstückig mit dem Anschlußstück 17 und dem Ring 19 ausgebildet. Die Stege 31 sind als Biegestege ausgebildet, die eine Bewegung des Spiegelglasträgers 2 relativ zum Träger 1 erlauben.

Der Ring 19 ist mit diametral einander gegenüberliegenden weiteren Stegen 18 an den Trägerteil 13 angebunden. Die Stege 18 liegen in einer Axialebene des Ringes 19 bzw. des Anschlußstückes 14 und, in Achsrichtung 15 gesehen, im Winkelabstand von 90° zu den Stegen 31. Der Trägerteil 13 weist eine zentrale Ausnehmung 32 auf (Fig. 2), in welcher das Anschlußstück 17 liegt. Es hat kleineren Durchmesser als die Ausnehmung 32. Die Stege 18 sind ebenfalls als Biegestege ausgebildet und schließen an den Rand der Ausnehmung 32 an.

Da die Stege 18, 31 in Winkelabständen von 90° zueinander angeordnet sind, läßt sich der Spiegelglasträger 2 in jede gewünschte Lage relativ zum Träger 1 verstellen, wobei die Stege entsprechend elastisch verformt werden.

Der Ring 19 umgibt das Verbindungsstück 14 über einen Teil seiner Länge mit Abstand (Fig. 3). Über die Stege 18, 31 und den Ring 19, der im Bereich zwischen dem Trägerteil 13 und dem Träger 1 liegt, ist der Spiegelglasträger 2 kardangelenkartig mit dem Träger 1 verbunden, so daß er einfach in die gewünschte Lage verstellt werden kann. Die flachen Stege 18, 31 werden hierbei quer zu ihrer Ebene elastisch gebogen.

Der Träger 1 weist auf seiner dem Spiegelglasträger 2 zugewandten Seite eine in Richtung auf den Spiegelglasträger sich erweiternde ringförmige Aufnahme 21 auf. Sie hat eine im Querschnitt gekrümmte Innenseite 22, die als Führung für vom Trägerteil 13 des Spiegelglasträgers 2 abstehende Führungselemente 23 dient. Sie sind lappenförmig ausgebildet und haben eine gekrümmte Außenseite 24 (Fig. 3), mit der sie flächig an der Innenseite 22 der Aufnahme 21 des Trägers 1 anliegen. Die Führungselemente 23 sind dünn ausgebildet. Vorteilhaft liegen sie unter zumindest geringfügiger elastischer Verformung an der Innenseite 22 der Aufnahme 21 an. Die Aufnahme 21 hat, wie Fig. 3 zeigt, einen Boden **13**, der im Bereich der Führungselemente 23 jeweils eine Ausnehmung 25 hat. Die Führungselemente 23 ragen durch die Ausnehmungen 25.

Der Spiegelglasträger 2 hat im Ausführungsbeispiel drei über seinen Umfang gleichmäßig verteilt angeordnete Führungselemente 23. Es ist auch möglich, den Spiegelglasträger 2 mit nur zwei oder mehr als drei Führungselementen 23 zu versehen. Sie sind nicht nur in ihrer Längsrichtung gekrümmt ausgebildet (Fig. 3), sondern auch in Umfangsrichtung des Spiegelglasträgers 2 (Fig. 2). Dadurch liegen die Führungselemente 22 sowohl über ihre Länge als auch in ihrer Umfangsrichtung flächig an der Innenseite 22 der trägerseitigen Aufnahme 21 an.

Aufgrund der eigenen Vorspannung der Führungselemente 22 wird zwischen dem Träger 1 und dem Spiegelglasträger 2 eine Reibkraft erzeugt, die den Spiegelglasträger 2 in seiner jeweils eingestellten Lage bezüglich des Trägers 1 hält. Zur Erhöhung der Reibkraft werden die Führungselemente 23 zusätzlich unter Druckkraft gegen die Innenseite 22 der Aufnahme 21 gedrückt. Hierzu ist eine Ringfeder 26 vorgesehen (Fig. 3), die unter elastischer Vorspannung an der Innenseite 27 der Führungselemente 23 anliegt. Zur Lagesicherung der Feder 26 ist der Ansatz 21 mit mindestens einem in Umfangsrichtung verlaufenden Steg 28 versehen, auf dem die Ringfeder 26 über einen Teil ihres Umfanges aufliegt. Vorteilhaft sind mehrere solcher radial vorstehender Stege 28 in Umfangsrichtung des Ansatzes 21 vorgesehen, so daß eine sichere Lagerung der Ringfeder gewährleistet ist. Die Vorspannung der Ringfeder 26 wird so gewählt, daß die Führungselemente 23 fest gegen die Innenseite 22 des Ansatzes 21 gedrückt werden, so daß der Spiegelglasträger 2 in jeder eingestellten Lage keine Vibrationen ausführen kann.

Da die Ringfeder 26 in ihrer Lage gesichert ist, bewegen sich beim Verstellen des Spiegelglasträgers 2 die Führungselemente 23 relativ zur Ringfeder 26. Dadurch ist gewährleistet, daß die Führungselemente 23 stets ausreichend fest gegen die Innenseite 22 der Aufnahme 21 gedrückt werden.

Die Führungselemente 23 sind mit radialem Abstand zum Trägerteil 13 angeordnet und mit ihm durch senkrecht zum Trägerteil angeordnete Stege 29, 30 (Fig. 2) verbunden. Da die Stege 29, 30 senkrecht zum Trägerteil 13 sowie quer zu den Führungselementen 23 liegen, sind die Führungselemente 23 optimal mit dem Trägerteil 13 verbunden. Wie Fig. 2 zeigt, liegen die Stege 29, 30 an den beiden in Umfangsrichtung liegenden Seiten jedes Führungselementes 23 und parallel zu einer Radialen des Trägerteiles 13. Die Führungselemente 23 stehen in Richtung auf den Träger 1 über mehr als ihre halbe Länge über die Stege 29, 30 vor. Die Führungselemente 23 sind selbstverständlich so lang, daß der Spiegelglasträger 2 in die jeweils gewünschte Lage relativ zum Träger 1 verstellt werden kann und eine ausreichende Führung an der Innenseite 22 der Aufnahme 21 gewährleistet ist. Die Außenseiten 24 der Führungselemente 23 liegen auf einer gedachten gemeinsamen Kugelfläche, auf welcher auch die Innenseite 22 der Aufnahme 21 liegt.

## Patentansprüche

1. Außenrückblickspiegel für Fahrzeuge, vorzugsweise für Kraftfahrzeuge, mit einem spiegelgehäuseseitigen Träger (1) und mit einem Spiegelglasträger (2), der gegenüber dem Träger (1) verstellbar ist und der in der eingestellten Lage durch mindestens ein Führungselement (23) abgestützt ist, das unter der Kraft mindestens einer Feder (26) an einer auf einer Hohlkugelfläche liegenden Gegenfläche (22) des Trägers (1) anliegt, wobei das Führungselement (23) eine in der Hohlkugelfläche liegende gekrümmte Außenseite (24) hat, mit der es flächig an der Gegenfläche (22) des Trägers (1) unter der Kraft der Feder (26) anliegt,
**dadurch gekennzeichnet, daß** das Führungselement (23) unter elastischer Verformung an der Gegenfläche (22) des Trägers (1) und die Feder (26) unmittelbar an der Innenseite (27) des Führungselementes (23) anliegt.

2. Außenrückblickspiegel nach Anspruch 1,
**dadurch gekennzeichnet, daß** die Feder (26) eine Ringfeder ist.

3. Außenrückblickspiegel nach Anspruch 1 oder 2,
**dadurch gekennzeichnet, daß** die Feder (26) am Träger (1) lagegesichert ist.

4. Außenrückblickspiegel nach einem der Ansprüche 1 bis 3,
**dadurch gekennzeichnet, daß** der Spiegelglasträger (2) kreisförmigen Umriß hat.

5. Außenrückblickspiegel nach einem der Ansprüche 1 bis 4,
**dadurch gekennzeichnet, daß** über den Umfang des Spiegelglasträgers (2) verteilt mehrere Führungselemente (23) vorgesehen sind, deren Außenseiten (24) in der Hohlkugelfläche liegen.

6. Außenrückblickspiegel nach einem der Ansprüche 1 bis 5,
**dadurch gekennzeichnet, daß** das Führungselement (23) über wenigstens einen quer zu ihm verlaufenden Steg (29, 30) mit dem Spiegelglasträger (2) verbunden ist.

7. Außenrückblickspiegel nach einem der Ansprüche 1 bis 6,
**dadurch gekennzeichnet, daß** der Spiegelglasträger (2) mit mindestens einem Lagerteil (12) in einer Aufnahme (3) des Trägers (1) gehalten ist.

8. Außenrückblickspiegel nach Anspruch 7,
**dadurch gekennzeichnet, daß** ein Trägerteil (13) des Spiegelglasträgers (2) über Federstege (18, 31) mit dem Lagerteil (12) verbunden ist.

9. Außenrückblickspiegel nach Anspruch 8,
**dadurch gekennzeichnet, daß** die Federstege (18, 31) in Winkelabständen von 90° zueinander angeordnet sind.

10. Außenrückblickspiegel nach Anspruch 8 oder 9,
**dadurch gekennzeichnet, daß** zwei diametral einander gegenüberliegende Federstege (18) den Trägerteil (13) des Spiegelglasträgers (2) mit einem Ring (19) verbinden, der über zwei weitere, diametral einander gegenüberliegende Federstege (31) mit dem Lagerteil (12) verbunden ist.

## Claims

1. An exterior rearview mirror, preferably for motor vehicles, comprising a support (1) on the mirror housing and a mirror-glass carrier (2) adjustable relative to the support (1) and supported in the adjusted position by at least one guide member (23) resting against a countersurface (22) of the support (1) under the force of at least one spring (26), the countersurface (22) lying on a hollow spherical surface, wherein the guide member (23) has a curved outer surface (24) lying inside the hollow spherical surface and lying flat against the countersurface (22) of the support (1) under the force of the spring (26), **characterised in that** the guide member (23) rests against the countersurface (22) of the support (1) under elastic deformation and the spring (26) rests directly against the inner surface (27) of the guide member (23).

2. An exterior rearview mirror according to claim 1, **characterised in that** the spring (26) is a ring spring.

3. An exterior rearview mirror according to claim 1 or 2,
**characterised in that** the spring (26) is positionally secured on the support (1).

4. An exterior rearview mirror according to any one of claims 1 to 3,
**characterised in that** the mirror-glass carrier (2) has a circular contour.

5. An exterior rearview mirror according to any one of claims 1 to 4,
**characterised in that** a plurality of guide members (3) are distributed over the circumference of the mirror-glass carrier (2), the outer surfaces (24) of the guide members (3) lying inside the hollow spherical surface.

6. An exterior rearview mirror according to any one of claims 1 to 5,
**characterised in that** the guide member (23) is connected to the mirror-glass carrier (2) by at least one crosspiece (29, 30) extending transversely to the guide member (23).

7. An exterior rearview mirror according to any one of claims 1 to 6,
**characterised in that** the mirror-glass carrier (2) is held in a recess (3) of the support (1) by at least one mounting part (12).

8. An exterior rearview mirror according to claim 7, **characterised in that** a carrier part (13) of the mirror-glass carrier (2) is connected to the mounting part (12) by resilient crosspieces (18, 31).

9. An exterior rearview mirror according to claim 8, **characterised in that** the resilient crosspieces (18, 31) are spaced apart by angles of 90°.

10. An exterior rearview mirror according to claim 8 or 9,
**characterised in that** two diametrically opposed resilient crosspieces (18) connect the carrier part (13) of the mirror-glass carrier (2) to a ring (19) connected to the bearing part (12) by two further diametrically opposed resilient crosspieces (31).

## Revendications

1. Rétroviseur extérieur pour véhicules, de préférence pour véhicules automobiles, comportant un support (1) côté boîtier du rétroviseur et un porte-miroir (2), qui est réglable par rapport au support (1) et qui, dans la position réglée, est soutenu par au moins un élément de guidage (23), lequel repose, sous la force d'au moins un ressort (26) sur la surface antagoniste (22) du support (1), laquelle repose sur une surface sphérique creuse, dans lequel l'élément de guidage (23) a une face extérieure (24) arquée reposant dans la surface sphérique creuse, par laquelle il repose à plat sur la surface antagoniste (22) du support (1) sous la force du ressort (26),
**caractérisé en ce que** l'élément de guidage (23) repose sous déformation élastique contre la surface antagoniste (22) du support (1) et le ressort (26) est en appui directement contre la face intérieure (27) de l'élément de guidage (23).

2. Rétroviseur extérieur selon la revendication 1, **caractérisé en ce que** le ressort (26) est un ressort-bague.

3. Rétroviseur extérieur selon l'une ou l'autre des revendications 1 et 2,
**caractérisé en ce que** le ressort (26) est fixé dans sa position sur le support (1).

4. Rétroviseur extérieur selon l'une quelconque des revendications 1 à 3, **caractérisé en ce que** le porte-miroir (2) a un contour de forme circulaire.

5. Rétroviseur extérieur selon l'une quelconque des revendications 1 à 4, **caractérisé en ce qu'**il est prévu plusieurs éléments de guidage (23) répartis sur la périphérie du porte-miroir (2), dont les faces extérieures (24) reposent dans la surface sphérique creuse.

6. Rétroviseur extérieur selon l'une quelconque des revendications 1 à 5, **caractérisé en ce que** l'élément de guidage (23) est relié, par au moins une entretoise (29, 30) s'étendant transversalement à lui-même, au porte-miroir (2).

7. Rétroviseur extérieur selon l'une quelconque des revendications 1 à 6, **caractérisé en ce que** le porte-miroir (2) est maintenu avec au moins une pièce de montage (12) dans un logement (3) du support (1).

8. Rétroviseur extérieur selon la revendication 7, **caractérisé en ce qu'**une partie porteuse (13) du porte-miroir (2) est reliée à la pièce de montage (12) par l'intermédiaire de barrettes à ressort (18, 31).

9. Rétroviseur extérieur selon la revendication 8, **caractérisé en ce que** les barrettes à ressort (18, 31) sont agencées à des distances angulaires de 90° les unes par rapport aux autres.

10. Rétroviseur extérieur selon la revendication 8 ou 9, **caractérisé en ce que** deux barrettes à ressort (18) diamétralement opposées l'une à l'autre relient la partie porteuse (13) du porte-miroir (2) avec une bague (19) qui est reliée à la pièce de montage (12) par deux autres barrettes à ressort (31) diamétralement opposées l'une à l'autre.
